# EUROPEAN PATENT APPLICATION

(11) **EP 4 760 266 A1**
(43) Date of publication of application: **17.06.2026**
(21) Application number: 24220283.6
(22) Date of filing: 16.12.2024
(51) Int. Cl.: G01N 35/10

(54) **FLUID MANIPULATION HEAD**

(71) Applicant: Lizenzia GmbH, 3645 Gwatt (CH)
(72) Inventor: Gyger, Fritz, 3645 Gwatt (CH); AESCHLIMANN, Fabian Tobias, 3098 Schliern b. Koeniz (CH)
(74) Representative: Keller Schneider Patent- und Markenanwälte AG

(57) **Abstract**

A fluid manipulation head (200) for aspirating and/or dispensing a fluid, comprising at least a first needle (201) and a second needle, wherein the first needle (201) and the second needle each comprising an area with an enlarged cross-section in a proximal area of the first needle (201) and the second needle in order to seal an opening of a first and a second needle receptacle (521) of a cleaning station (500) when the first needle (201) and the second needle is accommodated in the first and the second needle receptacle (521) respectively.

## Description

### Technical Field

The invention relates to a fluid manipulation head for aspirating and/or dispensing a fluid, comprising at least a first needle and a second needle. Further, the invention relates to a method for cleaning at least a first needle of a fluid manipulation head using a cleaning station.

### Background Art

In many areas of biotechnology, for example peptide synthesis, ELISA, bead-based assays, cell-based assays and microsphere-based assays or similar, as well as in general chemistry, e.g. chemical analysis, the aspirating and dosing of small volumes is of great importance.

Automated aspirating and dispensing units can tremendously improve the throughput in some of the mentioned fields by automatically aspirating or dispensing liquids into reaction vessels, for example into the wells of a microplate. An exemplary device is marketed by Fritz Gyger AG, for example, under the name Certus-Flex.

A major challenge after using such systems is to clean the needles used to dose or aspirate a liquid. In particular, when aspirating, the aspirating needles inevitably come into contact with the liquid in the well plate and must therefore be cleaned. This step is important, as high demands are generally placed on the cleanliness of the needles when they are reused. It is particularly important to avoid cross-contamination, where impurities can be carried over into the next process. The cleaning process should also remove any clogging and deposits from the needles.

Furthermore, the device for cleaning the needles should be as compact as possible in order to take up as little space as possible in the laboratory. Finally, the challenge is to be able to carry out the process for cleaning the needles as efficiently as possible without sacrificing purity.

Several concepts to achieve an automatic cleaning of needles exist: Commercially available dispensing, aspirating and cleaning units e.g. are equipped with several aspiration needles are well known in the art.

The US 9,164,013 B2 provides a reagent delivery system in an apparatus for processing biological samples arranged on carrier elements and comprises a probe for aspirating a portion of reagent. The probe comprises a continuous probe tubing extending through a rigid probe member and providing fluid communication from a dispensing end of said probe member to a pneumatic pressure regulation device.

The known fluid manipulation heads have the disadvantage, that an efficient and effective cleaning of the needle is hardly achievable, or only with great effort. Inadequate cleaning can lead to the carry-over of impurities, which in turn negatively affects subsequent processes carried out with the needle.

### Summary of the invention

The object of the invention is to create a fluid manipulation head belonging to the technical field initially mentioned, which is designed in such a way that cleaning of the same, in particular of a needle, can be carried out more effectively.

A further object of the invention is to provide for a method for cleaning a first needle of the fluid manipulation head belonging to the technical field initially mentioned, which allows the needle to be cleaned more effectively.

The solution to the problem is specified by a device according to the features of independent claim 1.

The fluid manipulation head for aspirating and/or dispensing a fluid comprises at least a first needle and a second needle, wherein the first needle and the second needle each comprise an area with an enlarged cross-section in a proximal area of the first needle and the second needle in order to seal an opening of a first and a second needle receptacle of a cleaning station when the first needle and the second needle are accommodated in the first and the second needle receptacle respectively.

For the description of the device, an x, y, z coordinate system is used where the x,y-plane is oriented horizontally, serving as the supporting surface or base for the device. The x-axis and y-axis lie on this horizontal plane, with the z-axis extending vertically. The x,y-plane thus represents the surface upon which the device is placed or mounted, while the z-axis defines the height or elevation of points relative to this horizontal base.

The first needle and the second needle each comprising an area with an enlarged cross-section in a proximal area of the needle facilitates the tight closing of an opening of a receptacle during a cleaning process.

Preferably, each needle has an individual area with enlarged cross-section, so that separate receptacles can be closed with the area with an enlarged cross-section. Alternatively, two or more needles can together comprise an area with an enlarged cross-section. This larger area with an enlarged cross-section can be used to close several receptacles at the same time, for example. On the other hand, the receptacle can also be designed in such a way that several needles can be accommodated in one receptacle. In this case, the area with an enlarged cross-section can be designed so that this larger receptacle can be closed.

In the preferred embodiment, exactly one receptacle is provided for each needle, which can be closed with the exactly one area with an enlarged cross-section of the needle.

This in turn means that during the cleaning process of the needle, no cleaning liquid and thus in particular no contamination introduced into the receptacle with the needle can escape from the receptacle. This effectively reduces or prevents the carry-over of contaminants during the cleaning process.

The fact that the receptacle is closed by the area with an enlarged cross-section during the cleaning process means that particularly intensive cleaning can be carried out. In particular, a relatively high flow rate of a cleaning fluid can be provided for this purpose, for example, without risking the carry-over of impurities. In particular, the flow rate can be selected to be so high that an increased mechanical cleaning effect can be achieved. The mechanical cleaning effect can take the form of an abrasive effect, which can be increased with suitable additives in the cleaning fluid.

As the receptacle is closed by the area with an enlarged cross-section during the cleaning process, the cleaning process can also be carried out under increased or reduced pressure. This further increases the possible field of action for the cleaning process. In particular, for example, alternating (pulsating) pressure build-up and reduction can be provided, which can optimize the cleaning process.

Furthermore, cleaning solutions can be used that may be harmful to humans (corrosive, toxic, etc.). The fact that the receptacle is sealed by the area with an enlarged cross-section means that people can be effectively protected from such cleaning solutions during the cleaning process.

The area with the enlarged cross-section can be formed in any way. For example, the needle can include a widening in the proximal area. The needle can also include a separate element that defines the area with an enlarged cross-section, for example a circumferential sealing element, in particular a rubber seal, a plug or the like.

The region with the enlarged cross-section is preferably connected directly to the needle. In variants, the region with the enlarged cross-section can also be connected indirectly to the needle, for example via a needle holder or the like.

The fluid manipulation head for aspirating and/or dispensing a fluid preferably comprises at least a first needle and a second needle, wherein the first needle and the second needle preferably extend out of a plug, the plug having a greater diameter than the needle in order to seal an opening of a receptacle of a cleaning station. In variants, the area with enlarged cross section can also have a different design instead of the plug, for example a widening of the needle in a proximal area or the formation of a closure on a needle holder.

The first needle and the second needle can be conventionally formed. In particular, they can be made of a metal, metal alloy, in particular a steel, polymer, composite material or the like. In a preferred embodiment, the needles are made of a metal, a ceramic material, in particular zirconiumoxide (ZrO₂), a crystalline material, in particular sapphire, or glass.

In a preferred embodiment, the first needle and the second needle have a coating that facilitates cleaning of the needle. Such a coating may, for example, comprise a material containing PTFE (polytetrafluoroethylene). In a simplest embodiment, the needle has the shape of an elongated hollow cylinder. The length can, for example, be between 5 mm and 30 mm, preferably between 10 mm and 20 mm. Alternatively, the length can also be less than 5 mm or more than 30 mm. The inner diameter of the needle is preferably between 0.2 mm and 3 mm, particularly preferably between 0.5 mm and 1.5 mm. However, the inner diameter can also be less than 0.2 mm or more than 3 mm. The wall thickness of the needle is preferably in the range of 0.05 mm and 0.5 mm, particularly preferably between 0.1 mm and 0.3 mm. However, the wall thickness can also be less than 0.05 mm or more than 0.5 mm.

The needles can have a tip for penetrating a septum. However, the tip can also be dispensed with. The tip can preferably also have the shape of a straight circular cylinder in a distal area. This tip shape is particularly suitable for aspirating a liquid from a container, especially from a microplate.

Preferably, the fluid manipulation head comprises more than two needles, particularly preferably between 4 and 20 needles, especially preferably between 6 and 16 needles. This allows a particularly efficient cleaning process to be provided, as the needles can be cleaned in parallel. In a particularly preferred embodiment, the fluid manipulation head comprises exactly 8 or exactly 16 needles. In variants, less than 4 or more than 20 needles can also be provided.

Preferably, the needles are aligned in parallel and in a row. In variants, the needles can also be aligned in more than one row. Preferably, all needles are essentially identical, particularly preferably identical. In the present context, 'essentially identical' means that the needles cannot be distinguished in terms of function, this means that the needles are identical, particularly in terms of their dimensions.

The plug has a larger diameter than the needle. This allows the plug to be used as a closure for a receptacle. The plug preferably has a maximum external diameter between 2 mm and 10 mm, in particular between 2.5 mm and 3.5 mm. In variants, the maximum external diameter can also be less than 2 mm or greater than 10 mm. The plug preferably has a length between 2 mm and 15 mm, in particular between 3 mm and 8 mm. The plug is thus sufficiently long to effectively close an opening of a receptacle. In variants, the length can also be less than 3 mm or greater than 15 mm.

The plug is preferably made of stainless steel. However, the plug can also be made of another metal or a metal alloy. Coated metals can also be provided, for example with nanocomposite, fluopolymers, etc., which can improve cleaning properties and sliding properties and also reduce carry-over of impurities. The plug can also be made of a polymer, more preferably of a thermoplastic polymer, in particular of polyether ether ketone (PEEK). The plug can also be made of ceramic/hard materials such as zirconium oxide, sapphire or glass. This can improve the cleaning properties and the sliding properties and also reduce the carry-over of impurities. Furthermore, good chemical resistance can be achieved. Summarizing, this means that a particularly robust material is chosen that is also easy to clean. In variants, the material can also be another polymer like PTFE, a composite material, rubber or the like.

The plug and the needle are preferably made of the same material. In variants, the materials of the plug and the needle can also differ.

Preferably, the plug has a cylindrical outer shape whereas a lateral surface of the plug is designed as a sealing surface. This results in a particularly simple plug design. Furthermore, the plug in the sealing element achieves a sealing effect that is largely independent of the depth of penetration of the plug in the sealing element or the o-ring.

In variants, the plug has a conical outer shape in at least a distal region, which tapers in the distal direction. The outer diameter is thus preferably reduced evenly from the maximum outer diameter to the needle. Preferably, the plug has the shape of a truncated cone in this area. This achieves an improved fit of the plug in the opening of the receptacle, which leads to an optimum seal of the opening regardless of temperature differences or the like. Furthermore, an improved sealing effect is achieved with less force. This means that when the plug is inserted into the opening of the receptacle, a good sealing effect can be achieved with less force. In variants, the conical outer shape can also be dispensed with. The plug can also be shaped in other ways. In a further preferred embodiment, the plug has a cylindrical shape, particularly preferably the shape of a right circular cylinder. The use of a cylindrical plug has the advantage that the sealing effect is largely independent of the penetration depth of the plug into a laterally acting sealing element. This means that there is more leeway in the lowering path of the needle into the needle receptacle compared to an endface seal.

Preferably, the conical outer shape comprises between one fifth and one half, more preferably approximately one third, of the total length of the plug. In variants, the length of the conical outer shape can also be less than a fifth or more than half of the total length of the plug.

Preferably, the maximum diameter of the plug corresponds to the large diameter of the conical outer shape. A cone angle of the conical outer shape is preferably between 5° and 20°, in particular preferably between 8° and 12°. In variants, the cone angle can also be less than 5° or greater than 20°.

Preferably, the distal end of the plug has a circular surface at right angles to the longitudinal direction of the needle, which has a larger diameter than the needle. This surface can also be referred to as the end face of the plug. Preferably, the end face has a diameter that is between 0.25 mm and 1 mm, preferably between 0.4 mm and 0.6 mm, smaller than the largest outer diameter of the plug.

Preferably, the plug has a central bore to accommodate the needle. Particularly preferably, the bore is continuous and without a shoulder (constant diameter), whereby the inner diameter of the plug corresponds to the outer diameter of the needle. In variants, the bore can also have a shoulder, which can, for example, serve as a stop for the needle when mounting the needle. In this case, the smaller inner diameter of the plug preferably corresponds to the inner diameter of the needle, while the larger inner diameter of the plug corresponds to the outer diameter of the needle.

Preferably, the central bore is formed on the plug in such a way that it is aligned coaxially with the plug when the needle is inserted.

In variants, the needle can also be formed in one piece with the plug.

Preferably, the first needle and the second needle are in fluid communication with a channel.

The channel is preferably designed as a common channel for the first needle and the second needle. In variations, several separate channels can be provided, with which the needles communicates individually. Furthermore, several channels can also be provided, with one channel communicating with more than one needle. When the fluid manipulation head is used as an aspiration device, the use of a common channel is particularly sufficient if the fluid to be aspirated is disposed of. In this case, it does not matter if the aspirated fluids are combined in the channel. However, if the fluid manipulation head is also to be used as a dosing device, it can be advantageous if the individual needles can be supplied separately with a fluid, especially if particularly precise volumes are to be dosed. For this purpose, one valve can be interposed per needle so that the individual channels can be controlled individually. The fluid manipulation head can therefore also be designed in such a way that a liquid can be aspirated and a liquid, in particular the aspirated liquid can be precisely dispensed via the same needle. The needle or a hose connection can be used as an intermediate reservoir for the liquid. The needles of such a fluid manipulation head can also be cleaned in the same way with the cleaning station.

Preferably, the channel can be connected to a vacuum source and or to a fluid dispensing source, wherewith a vacuum can be generated and/or a fluid can be dispensed in the first needle and in the second needle.

If the channel is connected to a vacuum source, a fluid can be aspirated through the first needle and the second needle. This can be particularly advantageous when operating the fluid manipulation head as an aspiration device. During a cleaning process of the fluid manipulation head, both a cleaning fluid can be introduced via the channel and a cleaning fluid can be aspirated via the needle. However, it is particularly preferable for a cleaning fluid to be introduced via the channel.

Preferably, fluid manipulation head also comprises a dispensing unit in addition to the aspirating unit. These are preferably designed to move together in a y-direction. This has the advantage that only one drive is required for the movement in the y-direction.

Preferably, the aspirating unit and the dispensing unit can also be moved together in the z-direction, which in turn means that only one drive can be provided for this movement. This results in a simple and compact design of fluid manipulation head.

However, in order to be able to aspirate liquids with the needle of the aspirating unit, these must generally project further downwards than the outlet nozzles of the dispensing unit. This is necessary because the needles of the aspirating unit have to be immersed in the liquid.

It is therefore intended that the needles of the aspirating unit can also be moved in the longitudinal direction of the needle relative to the dispensing unit. In principle, there are various options for this. The multiple needles can be moved together or individually in the z-direction.

Preferably, the fluid manipulation head comprises a needle unit, wherein the needle unit comprises the channel, the first needle and the second needle, and wherein the fluid manipulation head further comprises a holding unit, wherein the needle unit is movable relative to the holding unit along a needle longitudinal direction.

This creates a fluid manipulation head with which the needles can be moved in a longitudinal needle direction, preferably automatically (for example motorized, pneumatic etc.), in particular relative to the dispensing head.

This function has the primary purpose of moving the needle towards the fluid well holder for aspirating or dispensing a liquid. When aspirating liquids in particular, it is necessary to immerse the needle in the liquid to be aspirated, which requires a relative movement in the longitudinal direction of the needle between the fluid well holder and the needle. During the cleaning process in the cleaning station, it is usually also necessary to perform such a relative movement, especially if the cleaning station comprises receptacles into which the needles are inserted and washed.

In variants, the needle unit can also be dispensed with. In principle, it is also possible to achieve this relative movement by moving the fluid well holder or the cleaning station in the longitudinal direction of the needle.

Preferably, the needle unit can also be moved in one or two directions at right angles to the longitudinal direction of the needle, preferably automatically (for example motorized, pneumatic etc.). This allows the needle unit to be moved and positioned in a plane parallel to the longitudinal direction of the needle. Alternatively, it is also possible to dispense with the ability to move in one or both directions at right angles to the longitudinal direction of the needle.

Preferably, the fluid manipulation head comprises a wedge actuator, wherewith the needle unit is movable relative to the holding unit along a needle longitudinal direction.

This creates a particularly simple and especially compact actuator with which the needle unit can be moved in the needle longitudinal direction. The wedge actuator also has the advantage that the height can be set particularly easily and precisely. However, the skilled person is also familiar with other actuators for linear movement, e. g. a spindle, a rack and pinion drive or the like, and such a mechanism could also used for moving the needle in the needle longitudinal direction.

The wedge actuator comprises at least one wedge, which can be connected to the needle unit, for example. Various elements can be provided as a counterpart, which interacts with the wedge to achieve a lifting movement of the needle unit. On the one hand, a wedge can also be provided. On the other hand, sliding and/or rolling elements can be provided, which can be moved along the inclined plane of the wedge in such a way that the wedge performs a lifting movement, i.e. a movement in the longitudinal direction of the needle. The counterpart can be designed to move at right angles to the longitudinal direction of the needle. In the broadest sense, it is only necessary to ensure that the direction of movement of the counterpart is not parallel to the longitudinal direction of the needle. It is also conceivable that the counterpart is permanently connected to the needle unit instead of the wedge. Other possible designs of the wedge actuator are known to the skilled person.

Preferably the wedge actuator comprises a first wedge, which is fixedly connected to the needle unit, and a second wedge, which is movable mounted to the holding unit, wherein the second wedge can be moved relative to the holding unit, preferably at right angles to the longitudinal direction of the first needle, in such a way that the first wedge together with the needle unit can be moved in the longitudinal direction of the first needle.

This achieves a particularly simple wedge actuator. In variants, as mentioned above, exactly one wedge can also be provided, which interacts with another element as a further wedge. The other element can be designed as a wheel or roller, for example, which runs on the ramp of the wedge. Other variants are known to the skilled person.

Preferably, the wedge actuator comprises a plain bearing between the first wedge and the second wedge in order to reduce a friction between the first wedge and the second wedge.

In an embodiment, self-lubricating materials such as Teflon, bronze, oil-impregnated materials or similar can be employed.

The material can consist of its plastic mixture. The plastic mixture can, for example, be based on a base polymer, in particular a thermoplastic. Furthermore, solid lubricants can be incorporated into the polymer matrix, which can provide the self-lubricating properties. Reinforcing fibres can also be provided to improve wear resistance. Strength-enhancing fillers can also be provided, in particular microparticles such as ceramics. It is clear to the skilled person that one or more of the components mentioned may be omitted (e.g. the reinforcing fibres) or that further components may be added.

Furthermore, the plain bearing can also be designed with a particularly high surface quality of the respective wedge. In another embodiment, it would also be possible in principle to lubricate the surfaces with a lubricating oil or grease. In variants, the plain bearing can also be dispensed with. In this case, as mentioned above, one of the two wedges can, for example, be replaced by a ball bearing, a roller or the like.

Preferably, the wedge actuator comprises a resilient element, in particular a compression spring, wherewith the first wedge is pressed towards the second wedge, preferably in the direction of the first needle. This ensures stable positioning of the needle unit. If the second wedge is retracted, the resilient element can be used to prevent the first wedge from remaining in the raised position.

Another advantage is that the actuator does not necessarily have to be attached to the second wedge due to the resilient member. Since the first wedge is pressed downwards, a suitable design can also ensure constant contact between the actuator and the second wedge via the resilient member. This in turn allows for particularly easy assembly and disassembly of the fluid manipulator, especially of an aspirator. For example, the fluid manipulator can be fixed with just one screw.

Under certain circumstances, the resilient element can also be dispensed with. The first wedge and the second wedge can also be moved via a rail guide with one degree of freedom, e.g. a dovetail guide or similar. This can also ensure contact between the two wedges.

When the plug penetrates the O-ring, a counterforce is generated, which could cause the first wedge to be pushed up against the spring. There are several ways to prevent this effect.

On the one hand, the initial position of the first wedge can be at the top, so that it is pushed down by the second wedge moving against a spring (reverse of the wedge actuator). In this way, the second wedge forms the stop that prevents the needle from being pushed up when it enters the receptacle when the plug hits the O-ring.

In another variant, the first wedge and the housing can be equipped with magnets in such a way that the first wedge is held in the lowest position by the magnets. The magnetic force is set in such a way that it compensates for the counterforce of the O-ring. This can prevent the needle from being pushed up when the plug enters the O-ring.

In another variant, the first wedge can be equipped with a locking device that locks the first wedge in the lowest position. Such a locking device can, for example, include a guide rod for the wedge in the second wedge, which is connected to the second wedge at the front end via a pressure spring and which laterally features a locking pin. As long as there is counterpressure from the first wedge, the latch is held in a first position relative to the second wedge, in which the pressure spring is compressed. When the wedge is fully retracted, the guide rod can be retracted further, causing the locking pin to move relative to the second wedge and thus fix the first wedge in the lowest position.

Furthermore, the O-rings can be lubricated to reduce resistance when the plug enters. This measure can be used as an alternative or in addition to one of the above variants. In some variants, none of the above measures may be necessary, especially if the pressure spring of the first wedge is sufficiently strong.

Preferably, the wedge actuator comprises a linear actuator, in particular a step motor, for moving the second wedge relative to the first wedge. The wedge actuator can be controlled easily and precisely with the linear actuator. Linear actuators are generally known to the skilled person. They can be driven, for example, via a spindle, rack and pinion, etc. The drive can, for example, be designed as an electric motor, in particular as a stepper motor. For example, the linear actuator can be designed as a captive linear actuator or as a non-captive linear actuator. Other variants are known to the skilled person. The linear actuator can also be operated hydraulically or pneumatically.

In variants, the linear actuator can also be used to directly execute the stroke movement of the needle unit in the longitudinal direction of the needle, which means that the wedge actuator can also be dispensed with.

Preferably, an arrangement comprising a fluid manipulation head as described above and further comprising a cleaning station comprising a first needle receptacle having a first opening for receiving the first needle of the fluid manipulation head and the first needle receptacle further comprising a drain opening and/or inlet opening for the fluid, in particular for the cleaning fluid.

In a method for cleaning at least a first needle and a second needle of a fluid manipulation head using an arrangement described above. The first needle and the second needle each comprise an area with an enlarged cross-section in a proximal area of the first needle and the second needle in order to seal an opening of a first and a second needle receptacle of a cleaning station, wherein the first needle and the second needle are introduced into an opening of a first needle receptacle and a second needle receptacle respectively of a cleaning station in order to seal the opening of the first receptacle and the second receptacle.

Preferably, the first needle and the second needle each extend out of a plug, the plug having a greater diameter than the needle and the plug preferably having a conical outer shape, which tapers in the distal direction.

The fluid is preferably a cleaning solution, a rinsing solution, in particular an aqueous solution, an inorganic solution, water, an inorganic solvent, etc. The fluid may also comprise compressed air or nitrogen. The needle can be blown out particularly efficiently with compressed air - both to support the cleaning process and to dry the needle quickly after cleaning. A highly volatile liquid, in particular an alcohol such as isopropanol, is advantageously used to rinse the needle. This has the advantage that the needle can be dried more efficiently, for example using compressed air. Other suitable fluids for cleaning, rinsing and drying the needles are known to those skilled in the art.

The cleaning station is designed to wash the first needle. For this purpose, the arrangement is designed so that the needle unit can be moved so that the first needle can be inserted into the receptacle through the opening.

In the process, a fluid, in particular a cleaning solution or compressed air, is now flushed through the receptacle in order to wash the needle.

In a first variant, the fluid can be fed through the first needle into the receptacle and drained from there via the drain opening.

In a second variant, the fluid can be sucked into the receptacle through the inlet opening and discharged from there through the first needle. In this case, the first needle or the needle unit is used as an aspirating device.

In a third variant, the fluid is pumped into the receptacle through the inlet opening and discharged from there through the first needle. In this variant, the fluid is actively introduced through the inlet opening of the receptacle (e.g. via a pump).

In a fourth variant, the fluid is aspirated through the first needle into the receptacle, from where it is discharged through the drain opening. In this variant, an aspirating device is connected to the drain opening of the receptacle.

It is particularly preferable for the cleaning station to have more than one receptacle for receiving a needle, in particular a second receptacle for receiving the second needle. This allows several needles to be cleaned in parallel. Particularly preferably, the cleaning station has a number of receptacles corresponding to the number of needles, which means that all the needles in the needle unit can be washed in parallel in the cleaning station.

Preferably, each receptacle comprises a drain opening, which are brought together in a drain channel. This allows the fluid to be disposed of via a common drain. Preferably, the drain opening and the inlet opening of the receptacle are designed as a single opening, i.e. the opening serves as both a drain opening and an inlet opening.

This simplifies the design of the cleaning station. Preferably, the drain opening is arranged in an upper area of the receptacle so that the receptacle can be filled with the fluid. In variants, the drain opening can also be arranged elsewhere, for example laterally in a central or lower area of the receptacle. Furthermore, the drain opening can also be arranged at the bottom of the receptacle.

Preferably, the plug, in particular the conical outer shape of the plug, is sealing an opening of the at last one needle receptacle in the cleaning configuration. Therewith, the first needle is introduced into the first needle receptacle in such a way that the plug is sealing the opening of the first needle receptacle in the cleaning configuration, preferably between the conical outer shape and the opening. This protects the surroundings and other parts of the needle unit from soiling during the cleaning process (see above). The plug thus serves as a closure for the opening of the receptacle. Preferably, all needles of the needle unit can be accommodated in a receptacle, whereby the respective openings of the receptacle are closed with the plug of the needle.

The opening of the receptacle is preferably dimensioned in such a way that the plug can be guided at least partially into the opening, thus creating a contact surface between the opening and the plug via an outer surface of the plug. This achieves a particularly high sealing effect. Alternatively, the plug can also simply serve as a lid, which is placed on the opening of the receptacle. A combination of the plug's effect as a lid and a plug is also conceivable. However, it is particularly preferable that contact between the needle unit and the receptacle is made exclusively via the outer circumference of the plug. In the cleaning configuration, the plug is preferably in direct contact with the receptacle in order to close an opening in the receptacle. This means that no other element is provided that contributes to the sealing effect between the opening of the receptacle and the plug.

The plug thus preferably has a maximum outer diameter that is larger than the diameter of the opening of the receptacle. Furthermore, the plug preferably has a minimum outer diameter which is smaller than the diameter of the opening. Preferably, the conical outer shape extends from a maximum diameter to a minimum diameter, so that in the cleaning configuration reliable contact between an inner region of the opening and the conical outer shape is ensured.

Preferably, the opening comprises a sealing element, in particular an O-ring, wherein the conical outer shape of the plug is in contact with the sealing element in the cleaning configuration. The sealing element, or the O-ring, can be made of FEKM (Fluoroelastomer-Ketone Material), FKM (Fluorinated Ketone Material), silicone or other materials. Therewith, the first needle is preferably introduced into the first needle receptacle in such a way that the conical outer shape of the plug is in contact with the sealing element, in order to seal the opening of the at last one needle receptacle in the cleaning configuration. Therewith, the O-ring is hardly or not at all exposed to the cleaning liquid. This prevents contaminants from being carried over through the needle receptacle.

This achieves a particularly tight seal of the receptacle. This also largely prevents the sealing element, in particular the O-ring, from becoming contaminated during the cleaning process. This is achieved by the O-ring interacting laterally with the plug, meaning that the O-ring is hardly or not at all exposed to the cleaning liquid.

For this purpose, a receptacle of the cleaning station preferably includes an area with an enlarged cross-section in the area of the opening for receiving the sealing element. This area preferably has a diameter that corresponds to the diameter of the sealing element, in particular of the O-ring. Furthermore, this area preferably has a height that corresponds to a thickness of the sealing element, in particular of the O-ring. In the sealing element, the conical outer shape of the plug is finally preferably accommodated in the cleaning configuration, thus creating the sealing effect. The inner diameter of the sealing element, in particular of the O-ring, is therefore preferably smaller than the maximum outer diameter of the plug. The inner diameter of the sealing element may be larger than the minimum outer diameter of the plug - but this is not mandatory. In particular, if the plug is sufficiently compressible, the minimum outer diameter of the plug may also be larger than the inner diameter of the sealing element.

Various techniques can be used to hold the sealing element securely in the area with the enlarged cross-section. Preferably, a cover element is provided which, coaxially with the receptacle holes, which have a smaller diameter than the outer diameter of the sealing element, encompasses the sealing element in order to hold the sealing element, in particular when the plug is extended out of the sealing element. However, the openings in the cover element are preferably smaller than the largest diameter of the plug, so that the plug can be inserted through the opening of the cover element into the sealing element. In variants, the sealing element can also be glued in the area with the enlarged cross-section. Further variants for fixing the sealing element are known to those skilled in the art.

In the embodiment with the sealing element, the sealing element is part of the opening of the receptacle. The sealing element is thus the part which, in the cleaning configuration, together with the plug, effects the closure of the receptacle.

In the process, the sealing elements, in particular the O-rings, are preferably wetted. This reduces the resistance for the plug, which simplifies the insertion and removal of the plug into the sealing element.

Preferably, the opening of the receptacles is surrounded by a rim, which causes the opening to lie in a trough. The rim can be designed in such a way that all openings are arranged in a common trough. For this purpose, the openings are surrounded by the rim. This ensures that the sealing elements inserted into the openings can be particularly well wetted, since a wetting liquid can be prevented from flowing off by the rim. Furthermore, liquid emerging from the openings can be collected. The rim preferably includes a notch which serves as a spout. This allows any excess liquid to be drained in a controlled manner.

In the receptacle, the area with the enlarged cross-section is adjoined by a coaxial bore, in which the needle is finally accommodated in the cleaning configuration. A transition may be provided between the region of increased cross-section and the bore, e.g. a conical transition or a rounded transition. This avoids dead volumes in which impurities can accumulate. In the case of a conical transition, a cone angle may, for example, be between 45° and 120°, in particular, for example, 90°. This transition may also be dispensed with.

Preferably, the coaxial bore, in which the needle is finally accommodated in the cleaning configuration, has a drain opening which opens into a drain channel. Thus, preferably, the coaxial bore is fluidly connected to a drain channel. This way, the needle can be cleaned as thoroughly as possible, while the plug should preferably not come into contact with the cleaning water. This helps to prevent the spread of contamination.

This drain channel is preferably connected in an upper area of the coaxial bore, in particular preferably at an upper edge area of the coaxial bore, so that an outer side of the needle can also be cleaned particularly well. In variants, the drain channel can also be connected in a middle or lower area of the coaxial bore. The drain channel is preferably arranged at a right angle to the coaxial bore. In variants, the drain channel can also be aligned at an incline to the coaxial bore. Preferably, the drain channel has an inner diameter which is smaller than the inner diameter of the coaxial bore, in particular between 0.25 mm and 2 mm, preferably approximately 1 mm. In variants, the diameter can also be chosen to be smaller than 0.25 mm or larger than 2 mm.

Preferably, the drain channels open into a common collecting channel. The collecting channel preferably runs essentially perpendicular to the coaxial bore and to the drain channel. The collecting channel preferably has a larger diameter than the drain channel, so that the fluid can be easily discharged through the collecting channel. In contrast, the relatively small diameter of the drain channel can lead to a desired back pressure during the cleaning process, whereby a higher pressure can be achieved in the receptacle. This in turn can increase the effectiveness of the cleaning process.

The drain channels preferably open into the collecting channel in the upper half of the collecting channel. This prevents the fluid from flowing back from the collecting channel into the receptacle. Preferably, the collecting channel opens into a discharge channel through which the fluid can be disposed of.

The sealing element preferably has an external diameter between 2 mm and 20 mm, particularly preferably between 5 mm and 10 mm, in particular approximately 7 mm. In variants, the diameter can also be smaller than 2 mm or larger than 20 mm.

Preferably, the sealing element has a thickness between 1 mm and 4 mm, particularly preferably between 1.25 mm and 2 mm, in particular approximately 1.8 mm. In variants, the thickness can also be less than 1 mm or greater than 4 mm.

Preferably, the sealing element has an internal diameter between 1 mm and 15 mm, particularly preferably between 2 mm and 4 mm, in particular approximately 3 mm. In variants, the internal diameter can also be smaller than 1 mm or larger than 15 mm.

The sealing element is particularly preferably between 5 mm and 10 mm in external diameter, between 1.25 mm and 2 mm in thickness and between 2 mm and 4 mm in internal diameter.

Preferably, the sealing element is in the form of an O-ring, whereby the sealing element has a round cross-section. In variants, the sealing element can also have a rectangular, oval, X-shaped or otherwise shaped cross-section. For example, the sealing element can also be designed as a lip seal. An axial seal can also be provided instead of the radial seal. In particular, if an axial seal is provided, a quad ring can also be provided.

Preferably, the area with the enlarged cross-section has dimensions corresponding to the sealing element, preferably circular cylindrical dimensions, so that the sealing element can be accommodated appropriately (in height and diameter). In variants, the area with the enlarged cross-section can also be slightly smaller, so that the sealing element can be accommodated under tension in the area with the enlarged cross-section.

Preferably, the receptacle has a total length between 5 mm and 50 mm, in particular between 10 mm and 20 mm, measured below the conical transition and the floor of the receptacle (without drill tip),. In variants, the total length can also be less than 5 mm or greater than 50 mm.

Preferably, a diameter of the coaxial bore adjacent to the area with the enlarged cross-section is between 0.5 mm and 10 mm, preferably between 1 mm and 3 mm, in particular approximately 1.8 mm. In variants, the diameter can also be less than 1 mm or greater than 10 mm.

Preferably, the diameter of the coaxial bore connecting to the area with the enlarged cross-section is between 20% and 60%, more preferably between 35% and 45%, larger than the outer diameter of the needle. Experiments have shown that this can achieve a particularly effective cleaning process. In variants, the diameter can also be less than 20% (but greater than 0%) or more than 60% larger than the diameter of the needle.

This results in a cleaning station that is particularly easy to manufacture and essentially consists of three parts. On the one hand, it comprises the cleaning block, which is equipped with the receptacle, the drain channel and the collecting channel. The cleaning block can thus be produced by drilling operations (whereby auxiliary holes for the creation of the drain channel, namely from an outer side of the cleaning block to the collecting channel, are closed). On the other hand, the cleaning station comprises the sealing elements and a cover to hold the sealing elements, which is preferably secured by screws to the cleaning block.

Preferably, the fluid manipulation head, in particular the aspirating unit, comprises between 2 and 40 needles, preferably between 6 and 24 needles, more preferably between 8 and 16 needles, and the clean station comprises the equivalent number of receptacles for receiving the needles in the cleaning configuration. In a particularly preferred embodiment, the fluid manipulation head comprises exactly eight needles. In variants, more than 20 needles can also be provided.

Preferably, the needles are aligned in parallel and in a row, in particular in exactly one row. In variants, the needles can also be aligned in more than one row, for example in two rows of 8 needles each. Preferably, all needles are essentially identical, particularly preferably identical. In the present context, 'essentially identical' means that the needles cannot be distinguished in terms of function, this means that the needles are identical, particularly in terms of their dimensions.

Preferably, the cleaning station further comprises an ultrasonic bath for cleaning the first needle, wherein the ultrasonic bath is neighboring and preferably affixed to the at least one receptacle of the cleaning station. The ultrasonic bath can be used to pre-clean the needles to make the cleaning process particularly efficient. In some variants, the ultrasonic bath can also be dispensed with.

Other advantageous embodiments and combinations of features come out from the detailed description below and the entirety of the claims.

### Brief description of the drawings

The drawings used to explain the embodiments show:
- Fig. 1: a schematic isometric explosion view of the aspirating unit and the cleaning unit;
- Fig. 2a: a schematic cross-section along an y,z plane through a needle receptacle of a cleaning unit, where a needle of the aspirating unit, comprising a cylindrical plug, is accommodated in the needle receptacle;
- Fig. 2b: a schematic cross-section according to figure 2a, where the plug has a conical outer shape in a distal region;
- Fig. 3: a schematic cross-section along an x,z plane through a needle receptacle of the cleaning unit;
- Fig. 4a: a schematic cross-section along an x,z plane through a needle receptacle of the cleaning unit and the aspirating unit in the active position;
- Fig. 4b: a schematic cross-section according to figure 4a, where the plug has a conical outer shape in a distal region;
- Fig. 5a: a schematic isometric projection of an aspirating unit with the holding unit according to a first embodiment of the locking unit comprising a first embodiment of the locking unit comprising magnets;
- Fig. 5b1: a schematic cross-section along an y,z plane through a second wedge for a second embodiment of the locking unit according to the following figures 5b2 to 5b5;

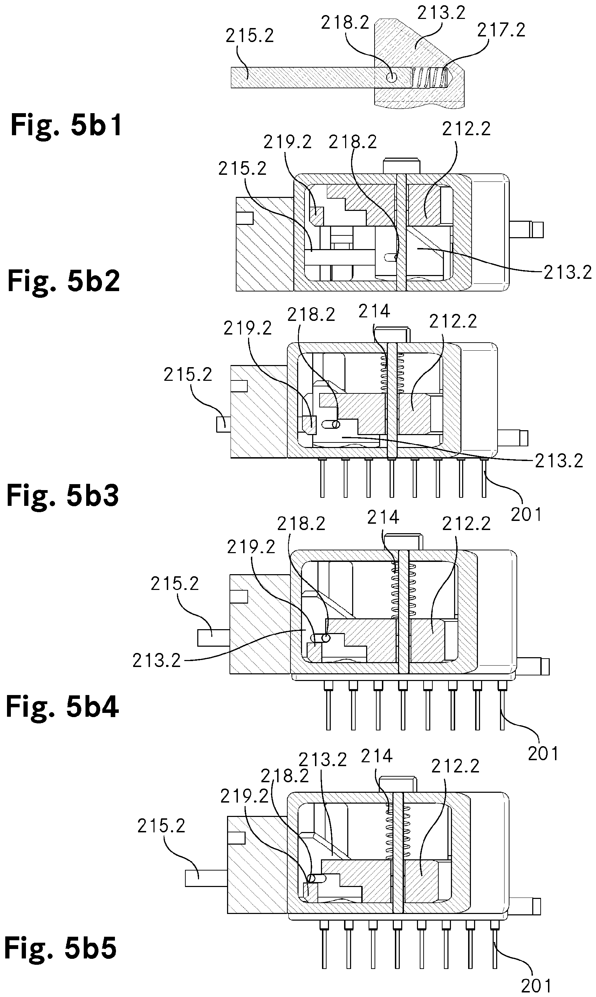

- Fig. 5b2: a schematic cross-section along an y,z plane through an aspirating unit with the holding unit according to a second embodiment of the locking unit comprising a locking pin, where the needles are raised;
- Fig. 5b3: a schematic cross-section according to figure 5b2, where the needles are lowered;
- Fig. 5b4: a schematic cross-section according to figure 5b2, with the needles in the lowest position, before locking with the pin;
- Fig. 5b5: a schematic cross-section according to figure 5b2, with the needles in the lowest position, after locking with the pin;

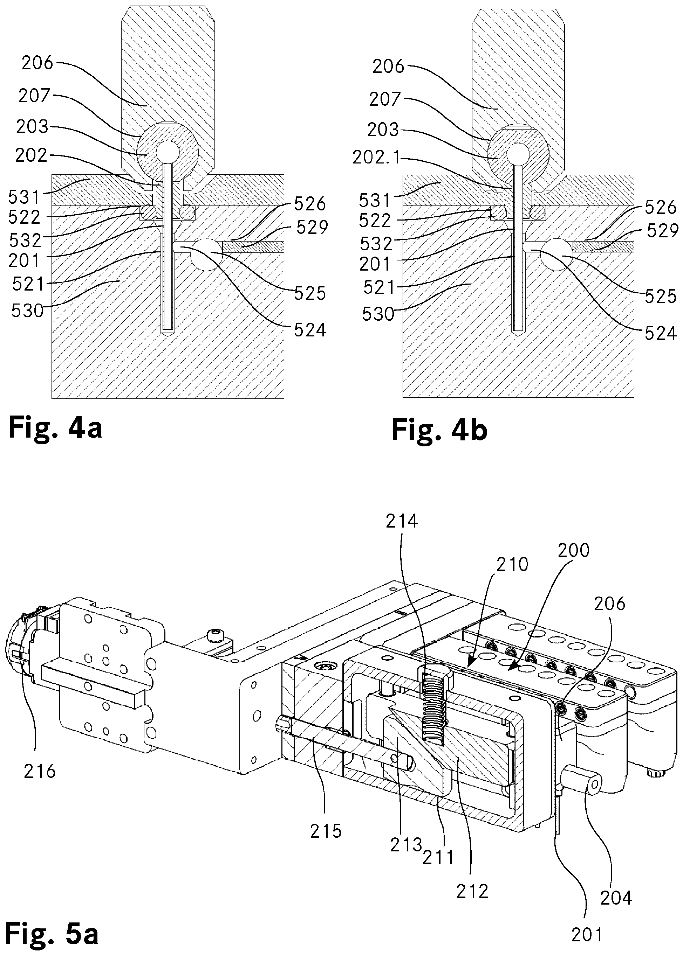

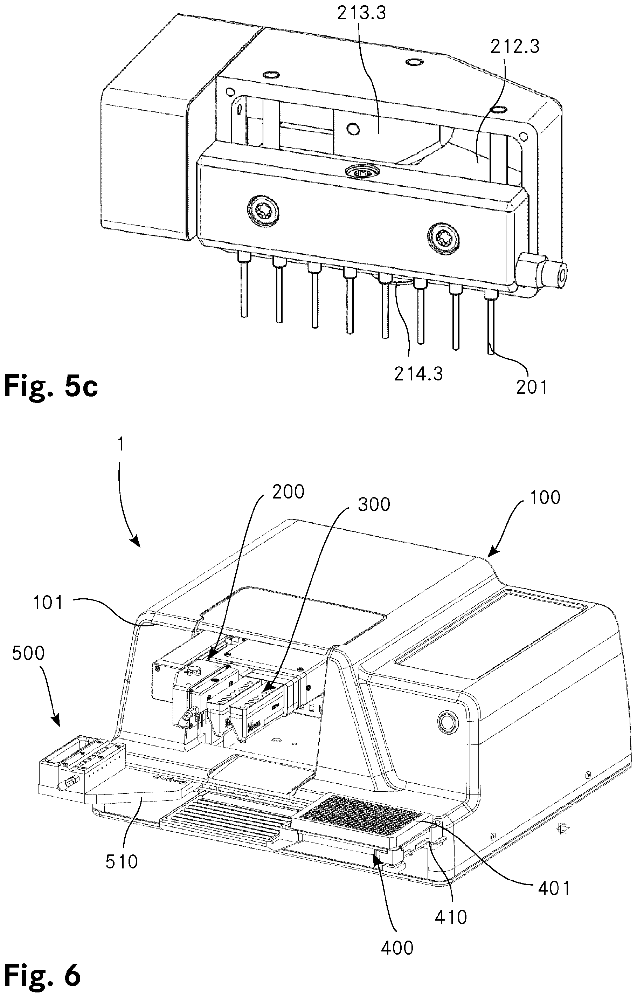

- Fig. 5c: a schematic isometric projection of an aspirating unit with the holding unit according to a third embodiment of the locking unit, where the wedge actuator is inversed in view figure 5a;
- Fig. 6: a schematic isometric projection of an embodiment of a device for handling a fluid, comprising a base station, an aspirating unit, a dispensing unit, a well plate holder and a cleaning station;

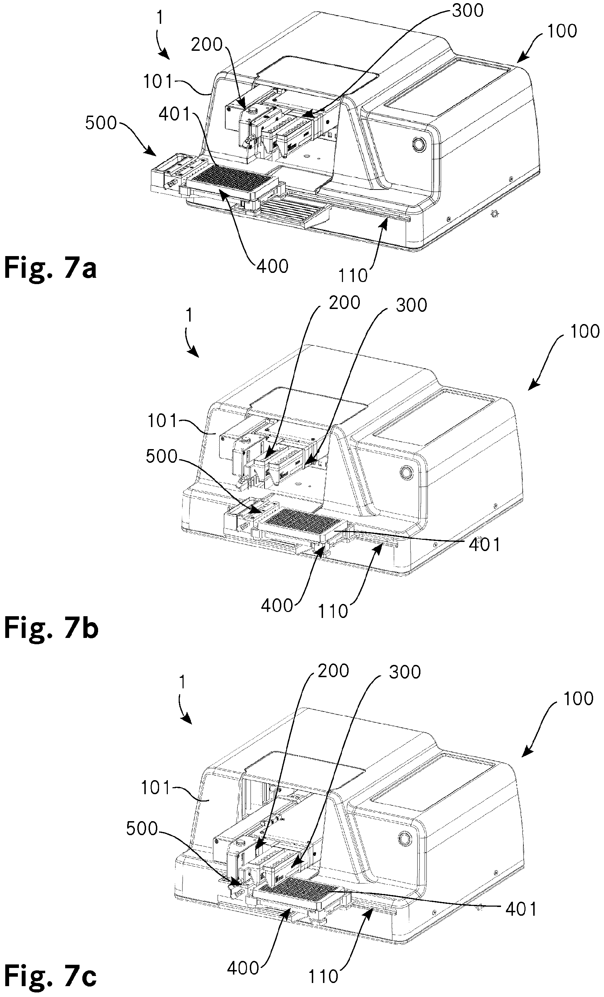

- Fig. 7a: the embodiment according to figure 6, wherein the cleaning station is in the parking position and the well plate holder is coupled to the cleaning station via the coupling element;
- Fig. 7b: the embodiment according to figure 6, wherein the cleaning station is positioned under the aspirating unit;
- Fig. 7c: the embodiment according to figure 6, wherein aspirating unit is in the cleaning position; and

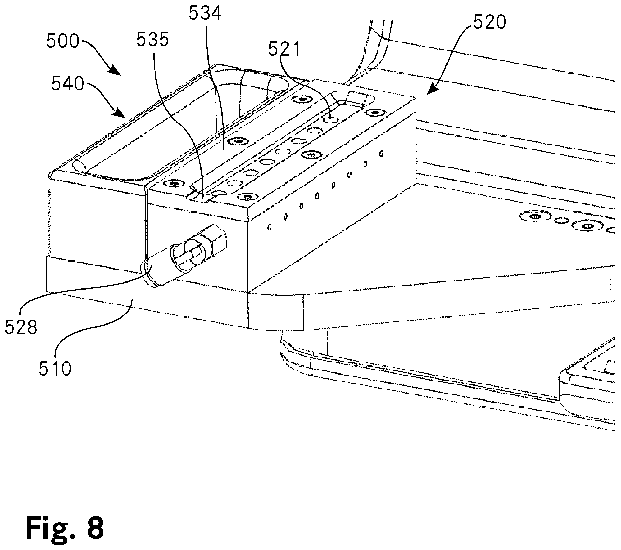

- Fig. 8: a schematic isometric projection of the cleaning station in the parking position.

In the figures, the same components are given the same reference symbols.

### Preferred embodiments

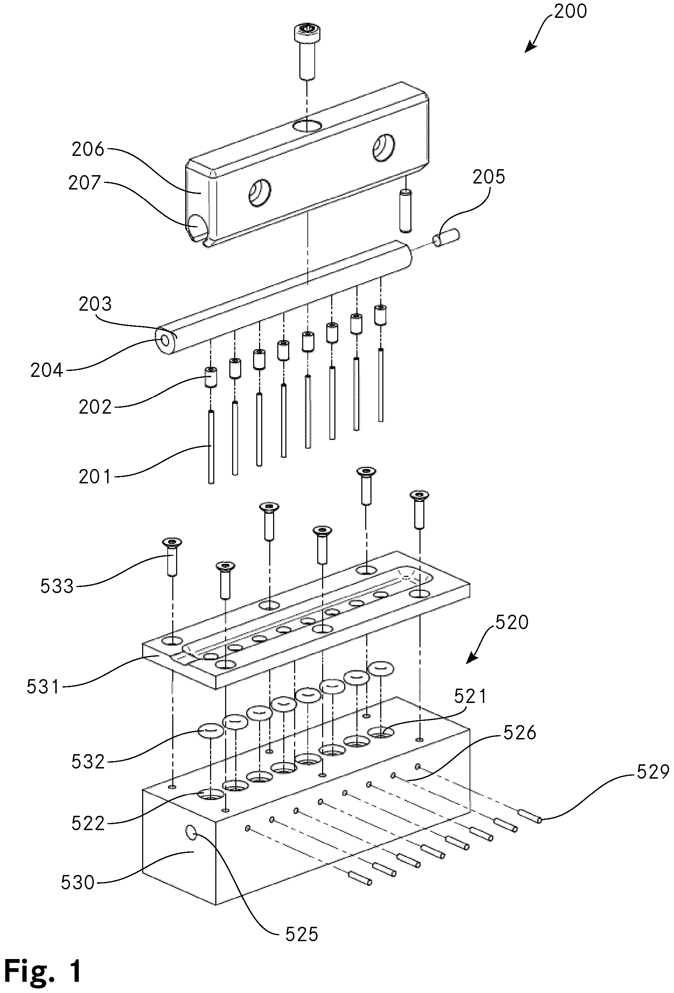

**Figure 1** shows a schematic isometric explosion view of the aspirating unit 200 and the cleaning unit 520.

The cleaning unit comprises a base body 530 with eight needle receptacles 521. An O-ring 532 is inserted in each needle receptacle 521 in the area with an enlarged cross-section 522. In order to hold the O-ring 532 in place, a cover element 531 is provided, which has openings corresponding to the openings of the needle receptacle 521, but which have a smaller diameter than the O-rings 532. The cover element 531 is attached to the base body 530 with screws 533.

The aspirating unit 200 comprises a base body 206 having a receptacle 207 for a needle unit 203.

The aspirating unit 200 comprises a needle unit 203 with a tubular aspiration channel. The aspiration channel is closed at one end by a plug 205, while at the other end an opening 204 is provided which can be connected to a vacuum source or a source of cleaning agents (not shown). In a cleaning process, the opening 204 can also be connected to a cleaning agent source or to compressed air in order to clean the needles.

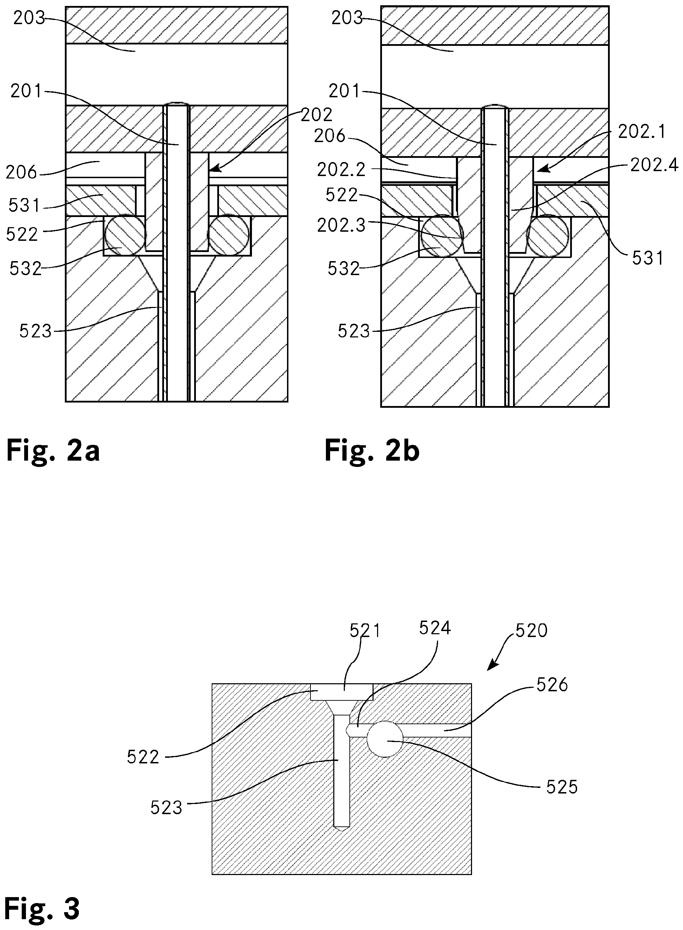

Eight needles 201 are arranged at right angles to the longitudinal direction of the aspiration channel 203, which are in fluid communication with the interior of the aspiration channel 203. The eight needles 201 are arranged at regular intervals, in a row. Proximally, each needle 201 is enclosed by a plug 202. In the cleaning configuration, each plug 202 seals with an O-ring 532, whereby the needle receptacle 521 is closed. The plug 202 circular-cylindrical. The O-ring is in lateral contact with the plug 202 when the plug is inserted into the O-ring. In a further variant, a plug 202.1 can be used, which is partially tapered in the distal direction (see figure 2b).

The aspirating channel 203 comprising the needles 201 can be inserted into a receptacle 207 of the base body 206. The receptacle 207 is designed as a longitudinally slotted bore 207, into which the needle unit 203 can be inserted in such a way that the needles 201 project at right angles out of the slot.

**Figure 2a** shows a schematic cross-section along an y,z plane through a needle receptacle 521 of the cleaning unit 520, where a needle 201 of the aspirating unit 200 is accommodated in the needle receptacle 521.

The needle 201 comprises a proximal plug 202 that serves as a closure for the needle receptacle 521 in the cleaning configuration. The area with an enlarged cross-section 522 is thus provided to receive the needle plug 202. This prevents uncontrolled leakage of cleaning liquid from the receptacle 521 during the cleaning process. The area with an enlarged cross-section 522 of the receptacle 521 accommodates a sealing element, in particular an O-ring. The O-ring has an inner diameter of 3 mm with a shear thickness of 2 mm. The O-ring can be made of FKM (fluororubber)/FPM (fluoroelastomer) or FFKM (perfluoroelastomer). In other variants, the O-ring can also be made of EPDM (ethylene propylene diene rubber), NBR (nitrile rubber) or FEP (fluoroethylene propylene). Finally, the O-ring can also be made of PTFE (polytetrafluoroethylene) coated elastomer. Therewith, the sealing of the receptacle during the cleaning configuration can be improved. The figure 2a is described in detail below.

At the top, the aspiration channel 203 can be seen in cross-section, as the cut lies along the y,z-plane. The needle 201 is inserted into a hole in the channel at right angles to the aspiration channel 203. The cannula is provided with a plug 202 in the proximal area, directly adjacent to the aspiration channel 203. The plug is designed as a separate component in the present case. In the present case, it is made of stainless steel. The plug 202 comprises a bore in which the needle 201 is accommodated. The needle 201 protrudes distally from the plug 202.

The needle 201 has an external diameter of 1.3 mm and an internal diameter of 1 mm. The length of the needle 201 is 21.5 mm. The needle 201 has no tip, so that the needle 201 is designed as a hollow cylinder overall.

The plug 202.1 is essentially designed as a hollow cylinder. The total length in the present case is 4.8 mm.. The overall diameter of the plug 202 is 3 mm, the internal diameter of the bore is 1.3 mm and thus matches the external diameter of the needle 201. At the distal end, the cylindrical plug comprises a bevel of 0.3 mm*10° (apex angle: 20°).

When assembled, the needle 201 extends through the plug 202. On the proximal side, the needle 201 protrudes by about 2.3 mm - this area is inserted into an opening of the aspiration channel 203. The aspiration channel 203 is accommodated in the base body 206 (see figure 1). On the distal side, a main length of the needle 201 extends out of the plug 202. The needles 201 are arranged at intervals of 9 mm.

The receptacles 521 of the cleaning unit 520 have an area with an enlarged cross-section 522 on the inlet side to accommodate a sealing element. This area with an enlarged cross-section 522 has a diameter of 7 mm. The depth in the needle length direction is 1.8 mm. The O-ring 532, which is inserted into the area with an enlarged cross-section 522, has a diameter of 7 mm, so that it fits exactly into the area with an enlarged cross-section 522. The inner diameter of the O-ring 532 is 3 mm, the cross-sectional diameter of the O-ring is 2 mm.

The distal diameter of the plug is 3.25 mm, which is larger than the inner diameter of the O-ring 532. However, this is not a problem because the round cross-section of the O-ring 532 allows the plug 202 to be inserted into the O-ring 532 without much resistance. This sizing of the O-ring 532 with respect to the plug 202 is even advantageous. The O-ring 532 is compressed by the plug 202 in such a way that the O-ring is in lateral contact with the plug over almost its entire height of 2 mm. This avoids dead volumes, which means that the cleaning liquid cannot become trapped between the O-ring 532 and the plug 202 by capillary action during the cleaning process. The O-ring 532 is held in place by the cover element 531 (see figure 1).

The area with an enlarged cross-section 522 is followed by the coaxial bore 523, in which the needle 201 is finally washed. The length of this bore 523 corresponds approximately to the length of the area of the needle 201 that protrudes from the plug 202. The diameter of the bore is 1.8 mm. Between the area with an enlarged cross-section 522 and the coaxial bore 523, a conical transition is provided, with a cone angle of 90° and a depth of 1 mm in the needle longitudinal direction. This ensures that the entire end face of the plug 202 is cleaned during the cleaning process (while the lateral surface of the plug 202 is covered and thus protected by the O-ring).

**Figure 2b** is a schematic cross-section according to figure 2a, where the plug 202.1 has a conical outer shape in a distal region as an alternative to the cylindrical plug 202. The plug 202.1 is essentially designed as a hollow cylinder, which tapers in a distal area 202.3 towards the distal end of the plug, i.e. is designed to be conical. The total length in the present case is 4.5 mm. The conical area 202.3 extends over a length of 2 mm and has a cone angle of 10°. Thus, the proximal cylindrical part 202.2 of the plug has a length of 2.5 mm.

The overall diameter, i.e. the maximum external diameter of the plug 202.1, is 3.6 mm, the internal diameter of the bore 202.4 is 1.3 mm and thus matches the external diameter of the needle 201. The minimum diameter in the distal area 202.3 is 3 mm. At the distal end, the plug with the conical outer shape in a distal region comprises a bevel at an angle of 10°.

**Figure 3** shows a schematic cross-section along an x,z plane through a needle receptacle 521 of the cleaning unit 520. In this figure, the drain channel 524 and the collecting channel 525 can now be seen, via which the cleaning agent can be removed.

The needle receptacle 521 comprises a drain channel 524, which is connected to a collecting channel 525. The drain channel 524 is arranged in an upper area of the coaxial bore 523 and runs horizontally, i.e. in the x,y plane or in the x direction. This ensures that the needle can also be completely washed from the outside.

The collecting channel 525 is aligned in the y-direction. All inlets of the eight receptacles 521 lead into the same collecting channel 525. This means that the cleaning liquid from all needle receptacles in the process is discharged via the same collecting channel 525.

The collecting channel 525 runs essentially perpendicular to the coaxial bore 523 and to the drain channel 524. The collecting channel 525 has a larger diameter than the drain channel 524, so that the fluid can be easily discharged through the collecting channel, without causing any back pressure during the cleaning process.

The drain channels 524 open into the collecting channel 525 in the upper half of the collecting channel 525. This prevents the fluid from flowing back from the collecting channel 525 into the receptacle 521. The collecting channel opens into a fluid outlet 528 through which the fluid can be disposed of (see figure 8).

Figure 3 also shows an auxiliary channel 526. This is only necessary for manufacturing reasons. It allows the drain channel to be created from the outside by means of a simple drilling operation. The auxiliary channel 526 is then closed with a dowel 529 up to the collecting channel 525 (see figure 1).

**Figure 4a** is a schematic cross-section along an x,z plane through a needle receptacle 521 of the cleaning unit 520 and the aspirating unit 200 in the active position. The plug 202 has a cylindrical shape, as in figure 2a.

This illustration mainly shows the structure in the assembled state, in particular in the active position according to figure 7c. In addition, the cross-section also shows the channels of the cleaning station 520 according to figure 3.

During the cleaning process, the cleaning solution is pumped through the aspirating channel 203 into the needle 201. The cleaning solution thus rinses the inside of the needle 201 and the aspirating channel 203. The cleaning solution exits the needle 201 into the receptacle 521, which also washes the outside of the needle 201. This is favoured by the fact that the drain channel 524 is connected to the receptacle 521 in a vertically upper area of the receptacle. Via the drain channel 524, the cleaning solution finally enters the collecting channel 525. The collecting channel 525 collects the cleaning solution from all of the eight receptacles 521.

Typically, a device for handling a fluid comprises both an aspirating unit 200 and a dispensing unit. These can be moved together in the y-direction and in the z-direction via an actuator. However, since the aspirating unit 200 is intended for aspirating fluids, the needles 201 must be able to dip into the fluid during aspiration. In doing so, outlet nozzles of a dispensing unit can be in the way sterically. To solve this problem, an actuator is provided with which the aspirating unit 200 can be moved relative to the dispensing unit in the z-direction.

**Figure 4b** is a schematic cross-section according to figure 4a, where the plug 202.1 has a conical outer shape in a distal region as an alternative to the cylindrical plug 202 (see figure 2b).

**Figure 5a** shows a schematic isometric projection of a aspirating 200 unit with the holding unit 210. The holding unit 210 comprises a wedge actuator, with which the aspirating unit 200 can be moved in the z-direction, i.e. in the needle longitudinal direction.

For this purpose, the holding unit 210 comprises a frame 211, in which a first wedge 212 and a second wedge 213 are arranged to be movable. The second wedge 213 is slidably arranged on a base of the frame 211 and is stationary with respect to the z-direction. The first wedge 212 is firmly connected to the aspirating unit 200, i.e. fixed relative to the aspirating unit 200. The first wedge 212 rests on the second wedge 213 so that the contact surface between the second wedge 213 and the first wedge 212 forms an inclined plane. The first wedge 212 is guided in the frame 211 so that it can move in the z-direction and is stationary with respect to the x-direction. If the second wedge 213 is now moved in the y-direction towards the first wedge 212, the first wedge 212 and thus the aspirating unit 200 is moved upwards in the z-direction. Conversely, if the second wedge 213 is moved away from the second wedge 213, the first wedge 212 is lowered in the z-direction, which also causes the aspirating unit 200 to move downwards.

To ensure that the first wedge 212 remains in contact with the second wedge 213, a compression spring 214 is provided, which acts between the frame 211 and the first wedge 212. In order to minimise friction between the second wedge 213 and the first wedge 212, either a plain bearing or a roller bearing can be provided. In this respect, the wedges are also to be interpreted broadly; essentially, the wedge actuator is intended to convert a movement in the y-direction into a movement in the z-direction.

The second wedge 213 is moved by a plunger 215. The plunger 215 in turn is driven by a linear actuator 216, in this case a stepper motor. The linear actuator can be captive or non-captive.

Since the first wedge 212 is permanently connected to the needle unit 203, there is a risk in a lower position of the needle unit 203 that when the needle 201 penetrates the needle receptacle 521, the needle unit 203 is pressed upwards against the spring force of the compression spring 214 due to the resistance between the plug 202 and the O-ring 532. Different approaches are possible to prevent this. In principle, the spring force of the compression spring 214 can be sufficiently strong. However, this would still have to generate a relatively large force in the released state, which means that a high force would have to be applied to lift the needle unit 203.

In the present embodiment, a base of the housing 211 and the first wedge 212 each comprise permanent magnets (not shown), with which the first wedge 212 can be magnetically fixed in the lowest position on the base of the housing 211. This fixation can be released again by pushing the second wedge forward. Instead of attracting magnets a combination of a magnet and an element made from a ferromagnetic material may be used.

**Figure 5b1** shows a schematic cross-section along an y,z plane through a second wedge 213.2 for a second embodiment of the locking unit according to the following figures 5b2 to 5b5. The second wedge 213.2 has a hole drilled in the y-direction to hold the plunger 215.2. The plunger 215.2 encompasses a pin 218.2, which extends through a slot in the second wedge 213.2 radially outwards in the x,y-plane.

A pressure spring 217.2 is arranged between the plunger 215.2 and the second wedge 213.2. The pressure spring 217.2 is designed in such a way that it compresses when the second wedge 213.2 is pushed forward by the linear actuator. This means that the pin 218.2 is in a forward position when the second wedge 213.2 is advanced. When the linear actuator is retracted, the pressure spring 217.2 relaxes, causing the pin 218.2 to be in a rear position of the slot.

**Figure 5b2** shows a schematic cross-section along an y,z plane through an aspirating unit 200 with the holding unit 210 according to a second embodiment of the locking unit comprising a locking pin 218.2 according to figure 5b1. In this figure, the needles are raised. This figure shows a situation in which the second wedge 213.2 has advanced completely, causing the first wedge 213.1 to be raised. This also causes the needles to be in the raised position. The compression spring is compressed.

In this situation, the plunger 215.2 is fully retracted into the second wedge 213.2, so that the pressure spring 217.2 is also compressed. It can also be seen that the pin 218.2 in the elongated hole has been fully pushed forward.

The first wedge 212.2 has a step 219.2, which will be explained together with the following figures.

**Figure 5b3** shows a schematic cross-section along an y,z plane through an aspirating unit 200 with the holding unit 210 according to figure 5b2, where the needles 201 are partially lowered. In this situation, the plunger 215.2 is still fully retracted into the second wedge 213.2, so that the pressure spring 217.2 is also compressed. The pin 218.2 is still fully extended in the elongated hole.

**Figure 5b4** shows a schematic cross-section along an y,z plane through an aspirating unit 200 with the holding unit 210 according to figure 5b2, with the needles 201 in the lowest position, before locking with the pin 218.2. This figure shows a situation in which the second wedge 213.2 is fully retracted. The first wedge 213.1 has thus reached the lowest position. This means that the needles 201 have also reached the lowest position. The compression spring 214 is thus in a relaxed state.

In this situation, the plunger 215.2 is still fully retracted into the second wedge 213.2, so that the pressure spring 217.2 is also compressed. The pin 218.2 is still fully extended in the elongated hole. However, the second wedge 213.2 is already hitting the back of the housing 211. When the plunger 215.2 moves back further, the second wedge 213.2 does not move back any further. When the plunger 215.2 is pushed back further, the pressure spring 217.2 relaxes, causing the pin 218.2 to move backwards in the elongated hole.

**Figure 5b5** shows a schematic cross-section along an y,z plane through an aspirating unit 200 with the holding unit 210 according to figure 5b2, with the needles 201 in the lowest position, after locking with the pin 218.2. Because the pin 218.2 moves backwards in the slot, the pin 218.2 now moves over the step 219.2. This causes the pin 218.2 to block the first wedge 212.2 from moving upwards. This prevents the needle 201 from being pushed upwards by counterforces when it is inserted into the receptacle 521, in particular when the plug 205 is inserted into the O-ring 532.

**Figure 5c** shows a schematic isometric projection of an aspirating unit with the holding unit according to a third embodiment of the locking unit, where the wedge actuator is inversed compared to figure 5a. The first wedge 212.3 is pushed up by the pressure spring 214.3 in the housing 211. The second wedge 213.3 is guided on an inner cover surface of the housing 211. When the second wedge 213.3 is retracted, the first wedge 212.3 is thus moved downwards against the spring force. In the lowest position, the first wedge 212.3 is blocked by the second wedge 213.3. This prevents the needle 201 from being pushed upwards by counterforces when it is inserted into the receptacle 521, in particular when the plug 205 is inserted into the O-ring 532.

**Figure 6** is an isometric schematic top view of a device 1 for handling a fluid, in particular for dispensing and aspirating a fluid, comprising a base station 100 with a housing 101, an aspirating unit 200 for aspirating a liquid, a dispensing unit 300 for dispensing a liquid, a well plate holder 400 or more generally a fluid well holder for holding a well plate 401, in particular a microplate and a cleaning station 500.

The dispensing unit 300 is a device to automatically dispense selected liquids into individual wells of the well plate 401, in particular a microplate. The dispensing unit 300 is preferably a CERTUS FLEX dispensing unit that is commercially available from Fritz Gyger AG.

The dispensing unit 300 is a device to automatically dispense selected liquids into individual wells of a well plate 401, in particular a microplate. The dispensing unit 300 further comprises a dispensing head with several valves that allow to dispense small dosages of liquids. The dispensing head has several channels that allow to dispense more than one liquid during the same workflow, i.e. without a manipulation of the dispensing unit 300. The dispensing head can move along a horizontal y-axis. This allows the dispensing head to position any of its several valves above any one of the wells in a column of wells. The dispensing head in this embodiment is also able to change its height to adapt to different installations and types of microplates.

The aspirating unit 200 and the dispensing unit 300 are moved together, i.e. they are designed to be movable together in the y-direction and in the z-direction via a common drive. This enables targeted access to individual wells of the well plate.

Since the needle of the aspirating unit 200 can interfere with the dispensing unit 300 during dispensing, or must dip into the liquid of the well plate during aspiration, the needle unit 203 of the aspirating unit 200 can be moved in the z-direction relative to the dispensing unit 300. This means that the needle of the aspirating unit 200 can be lowered in the z-direction with respect to the dispensing nozzles of the dispensing unit 300. This prevents a collision of the dispensing nozzles of the dispensing unit 300 with the well plate.

The well plate holder 400 is movable along an x-axis relative to the base station 100 along a first rail guide 110 of the base station 100. The first rail guide 110 is attached to the base station 100 in a vertical plane, i.e. in an x,y plane, and runs horizontally, i.e. in the x direction. The base station 100 comprises a drive with which the well plate holder 400 can be moved along the first rail guide 110 in the x-direction.

The device comprises a control unit with which the drive can be controlled. This allows the well plate holder 400 to be positioned relative to the aspirating unit 200 or the dispensing unit 300 so that different wells of the well plate 401 can be approached.

The aspirating unit 200 and the dispensing unit 300 can be moved in the y-direction relative to the base station 100. This means that the aspirating unit 200 and the dispensing unit 300 can be moved at right angles to the first rail guide. The aspirating unit 200 and the dispensing unit 300 can also be moved in the z-direction. This allows the aspirating unit 200 and the dispensing unit 300 to be moved from a parking position, partially inside the housing 101 to an active position outside the housing 101 (see fig. 6).

In the procedure, the well plate holder 400 with the well plate 401 and the aspirating unit 200 or the dispensing unit 300 can be moved in such a way that the well plate 401 is located below the aspirating unit 200 or the dispensing unit 300. The aspirating unit 200 or the dispensing unit 300 can then be moved in the y-direction towards the well plate 401, whereby a liquid can be aspirated from the well plate 401 using the aspirating unit 200 or dispensed into the well plate 401 using the dispensing unit 300.

When aspirating, the needles of the aspirating unit 200 inevitably come into contact with the liquid in the well plate 401 and must therefore be cleaned. For this purpose, the device includes the cleaning station 500.

In order to achieve a compact design of the device, the aspirating unit 200 and the dispensing unit 300 cannot be moved in the x-direction. Therefore, it is now intended that the cleaning station 500 can be moved in the x-direction.

For this purpose, the cleaning station 500 comprises a carriage 510 that can be moved on a first rail guide 110 of the base station 100.

To keep the device simple and compact, the cleaning station 500 is placed on the first rail guide 110 without a drive. This means that the cleaning station cannot be moved automatically by itself, but can only be moved via the drive of the well plate holder 400. To do this, the drive of the well plate holder 400 can be coupled to the cleaning station 500 in such a way that the cleaning station 500 can be moved along the x-direction by actuating the drive. In the present embodiment, the well plate holder 400 and the cleaning station 500 are equipped with a coupling means by which the well plate holder 400 can be coupled to the cleaning station 500. The coupling means are in the present case designed as a magnetic coupling. This comprises a magnet on the cleaning station 500 and a magnetic element or another magnet on the well plate holder 400.

Figure 6 shows the device for handling a fluid in a situation, where the cleaning station 500 and the well plate holder 400 are both in a parking position. The parking position of the cleaning station 500 is at the opposite end of the rail guide to the parking position of the well plate holder 400.

In the procedure for cleaning the needles of the aspirating unit 200, the well plate holder 400 is now moved from its parking position (see fig. 6) along the first rail guide in the x-direction to the cleaning station 500, which is in a parking position (see fig. 6). As soon as the distance between the well plate holder 400 and the cleaning station is sufficiently small, the cleaning station 500 docks onto the well plate holder via the magnetic coupling.

This situation is shown in **figure 7a****,** where the cleaning station 500 is in the parking position and the well plate holder 400 is coupled to the cleaning station via the coupling element, i.e. the magnetic element.

The well plate holder 400 then moves in the opposite direction along the first rail guide 110, pulling the cleaning station 500 along the first rail guide 110.

The cleaning station 500 is then positioned by the well plate holder 400 under the aspirating unit 200. The aspirating unit 200 is still in the raised position. This situation is shown in **figure 7b****.**

To carry out the cleaning process, the aspirating unit 200 is now moved downwards in the z-direction so that the needles are positioned in the cleaning station, where the needles are washed, which is the active position. This situation is shown in **figure 7c****.**

After the cleaning process, the aspirating unit 200 is raised again in the z-direction to reach the situation shown in figure 7b, and, if necessary, transferred to its parking position (in the y-direction into the housing 101).

The cleaning station 500 is then pushed back to its parking position by the well plate holder 400 as shown in figure 7a.

In this position, the cleaning station 500 is still coupled to the well plate holder 400 via the magnetic coupling. To release this coupling, the device includes a locking element with which the cleaning station can be fixed relative to the base station in the parking position. The locking element includes a latch that arrests the carriage 510 in one direction towards the well plate holder 400.

After the cleaning station 500 has reached the parking position, the cleaning station 500 is locked in the parking position by means of the locking element, and the well plate holder 400 is moved in the opposite direction, away from the locking element causing the magnetic coupling to disengage, leaving the cleaning station 500 in the parking position while the well plate holder 400 moves away from the cleaning station 500 to the parking position of the well plate holder 400 according to figure 6.

Figure 8 shows a schematic isometric projection of the cleaning station 500 in the parking position.

The cleaning station 500 includes a carrier 510 that is guided on the first rail guide 110 (see above). The carrier 510 is plate shaped and serves as a supporting surface for a cleaning unit 520 and an ultrasonic bath 540.

The ultrasonic bath 540 is arranged behind the cleaning unit 520 in the x-direction, with the cleaning unit 520 facing the well plate holder 400.

The ultrasonic bath 540 is intended to pre-clean any stubborn contamination on the needle of the aspirating unit 200 before the cleaning process in the cleaning unit 520.

The cleaning unit 520 comprises eight needle receptacles 521 in which the needles of the aspirating unit 200 can be received in order to wash them. Furthermore, the cleaning unit 520 includes a fluid outlet 528 for the outflow of the cleaning solution. The fluid outlet 528 is connected to a collecting channel within the cleaning unit 520, which in turn is connected to all needle receptacles 521 (see figure 3). Thus, in the process, a cleaning solution can be pumped through the needles into the needle receptacles 521 via the aspirating unit 200, whereby the needles are also washed from the outside before the cleaning solution is discharged via the channel from the fluid outlet 528.

In the process, the sealing elements, in particular the O-rings (see e.g. figure 2a, 2b), are preferably wetted. This reduces the resistance for the plug, which simplifies the insertion and removal of the plug into the sealing element.

Preferably, the cover element 531 is surrounded by a rim 534, which causes the receptacles 521 to lie in a trough. This ensures that the sealing elements inserted into the openings can be particularly well wetted, since a wetting liquid can be prevented from flowing off by the rim. Furthermore, liquid emerging from the receptacles 521 can be collected inside the rim 534. The rim preferably includes a spout 535. This allows any excess liquid to be drained in a controlled manner.

For the magnetic coupling, the well plate holder in this case comprises a first permanent magnet (not shown). The carrier 510 comprises a second permanent magnet, which allows the first permanent magnet to interact magnetically with the second permanent magnet of the carrier 510.

The invention provides an aspiration device whose needles can be washed particularly safely and efficiently in a cleaning station.

## Claims

1. A fluid manipulation head (200) for aspirating and/or dispensing a fluid, comprising at least a first needle (201) and a second needle, wherein the first needle (201) and the second needle each comprise an area with an enlarged cross-section in a proximal area of the first needle (201) and the second needle in order to seal an opening of a first and a second needle receptacle (521) of a cleaning station (500), when the first needle (201) and the second needle are accommodated in the first and the second needle receptacle (521) respectively.

2. The fluid manipulation head (200) according to claim 1, **characterized in that** the area with enlarged cross-section in the proximal area of the first needle (201) and the second needle comprises a plug (202; 202.1), wherein the first needle (201) and the second needle preferably extend out of a plug (202; 202.1) respectively, the plug (202; 202.1) having a greater diameter than the needle.

3. The fluid manipulation head (200) according to claim 2, **characterized in that** the plug (202) has a cylindrical outer shape whereas a lateral surface of the plug (202) is designed as a sealing surface.

4. The fluid manipulation head (200) according to one of the preceding claims, **characterized in that** the first needle (201) and the second needle are in fluid communication with a channel and wherein the channel can be connected to a vacuum source and or to a fluid dispensing source, wherewith a vacuum can be generated and/or a fluid can be dispensed in the first needle (201) and in the second needle.

5. The fluid manipulation head (200) according to claim 4, **characterized in that** the fluid manipulation head (200) comprises a needle unit (203), wherein the needle unit (203) comprises the channel, the first needle (201) and the second needle, and wherein the fluid manipulation head (200) further comprises a holding unit (210), wherein the needle unit (203) is movable relative to the holding unit (210) along a needle longitudinal direction.

6. The fluid manipulation head (200) according to claim 5, **characterized in that** the fluid manipulation head (200) comprises a wedge actuator, wherewith the needle unit (203) is movable relative to the holding unit (210) along the needle longitudinal direction.

7. The fluid manipulation head (200) according to claim 6, **characterized in that** the wedge actuator comprises a first wedge (212), which is fixedly connected to the needle unit (203), and a second wedge (213), which is movably mounted to the holding unit (210), wherein the second wedge (213) can be moved relative to the holding unit (210), preferably at right angles to the longitudinal direction of the first needle (201), in such a way that the first wedge (212) together with the needle unit (203) can be moved in the needle longitudinal direction.

8. The fluid manipulation head (200) according to claim 7, **characterized in that** the wedge actuator comprises a plain bearing between the first wedge (212) and the second wedge (213) in order to reduce a friction between the first wedge (212) and the second wedge (213).

9. The fluid manipulation head (200) according to one of claims 7 to 8, **characterized in that** the wedge actuator comprises a resilient element, in particular a compression spring (214), wherewith the first wedge (212) is pressed towards the second wedge (213), preferably in the direction of the first needle (201).

10. The fluid manipulation head (200) according to claim 7 or 9, **characterized in that** the wedge actuator comprises a linear actuator (216), in particular a step motor, for moving the second wedge (213) relative to the first wedge (212).

11. Arrangement comprising a fluid manipulation head (200) according to one of the preceding claims, further comprising a cleaning station (500) comprising a first needle receptacle (521) having a first opening for receiving the first needle (201) of the fluid manipulation head (200) and the first needle receptacle (521) further comprising a drain opening for draining the fluid.

12. The arrangement according to claim 11, **characterized in that** the plug (202), in particular the cylindrical outer shape of the plug (202), is sealing an opening of the at last one needle receptacle in a cleaning configuration, when the first needle is received in the first needle receptacle.

13. The arrangement according to claim 12, **characterized in that** the opening comprises a sealing element, in particular an O-ring, wherein the cylindrical outer shape of the plug (202) is in contact with the sealing element in the cleaning configuration.

14. The arrangement according to one of claims 11 to 13, **characterized in that** the cleaning station (500) further comprises an ultrasonic bath for cleaning the first needle (201), wherein the ultrasonic bath is neighboring and preferably affixed to the at least one receptacle.

15. Method for cleaning at least a first needle (201) and a second needle of a fluid manipulation head (200) using an arrangement according to one of claims 11 to 14, wherein the first needle (201) and the second needle each comprise an area with an enlarged cross-section in a proximal area of the first needle (201) and the second needle in order to seal an opening of a first and a second needle receptacle of a cleaning station (500), wherein the first needle (201) and the second needle are introduced into an opening of a first needle receptacle (521) and a second needle receptacle respectively of a cleaning station (500) in order to seal the opening of the first receptacle and the second receptacle by the area with enlarged cross-section of the first needle (201) and the second needle respectively.

16. Method according to claim 15, **characterized in that** the area with an enlarged cross-section comprises a plug (202; 202.1), the first needle (201) and the second needle each extending out of the plug (202; 202.1) respectively, the plug (202; 202.1) having a greater diameter than the needle, the first needle (201) is introduced into the first needle receptacle (521) in such a way that the plug (202; 202.1) is sealing the opening of the first needle receptacle (521) in the cleaning configuration.

17. Method according to claim 16, **characterized in that** the first needle (201) is introduced into the first needle receptacle (521) in such a way that the plug (202) is sealing the opening of the first needle receptacle (521) in the cleaning configuration between the cylindrical outer shape and the opening.

18. Method according to claim 17, **characterized in that** the opening of the first needle receptacle (521) comprises a sealing element, in particular an O-ring, wherein the first needle (201) is introduced into the first needle receptacle (521) in such a way that the cylindrical outer shape of the plug (202) is in contact with the sealing element, in order to seal the opening of the at last one needle receptacle in the cleaning configuration.
